(19) Europäisches Patentamt

European Patent Office

Office européen des brevets

(11) **EP 1 707 533 A1**

(12) **EUROPEAN PATENT APPLICATION**

(43) Date of publication:
04.10.2006 Bulletin 2006/40

(51) Int Cl.:
*C01B 39/04* (2006.01)    *C01B 39/40* (2006.01)

(21) Application number: 05075770.7

(22) Date of filing: 01.04.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(71) Applicants:
 • PETROLEO BRASILEIRO S.A. - PETROBRAS
   Rio de Janeiro (BR)
 • Albemarle Netherlands B.V.
   3818 LE   Amersfoort (NL)

(72) Inventors:
 • Lam, Yiu Lau
   Rio de Janeiro, R.J. 22280-040 (BR)
 • Stamires, Dennis
   Newport Beach, CA 92660 (US)

 • Gorne, Janaina
   Rio de Janeiro, R. J. 23087-390 (BR)
 • Wasserman, Rosana
   Jacarepagu
   Rio de Janeiro, R.J.22723-006 (BR)
 • Moreira Ferreira, José Marcos
   Rio de Janeiro, R.J. 22280-020 (BR)
 • Da Silva, Jairo
   Rio de Janeiro, R.J. (BR)

(74) Representative: Rasser, Jacobus Cornelis
   Howrey LLP
   Rembrandt Tower
   Amstelplein 1, 31st Floor
   1096 HA Amsterdam (NL)

(54) **Nucleating gel, process for its preparation, and its use in the synthesis of MFI-type zeolite**

(57)    Process for the preparation of a nucleating gel, which process comprises the steps of: mixing sodium silicate, water, and a quaternary ammonium salt, adjusting the molar ratio $OH^-/SiO_2$ in the mixture to a value in the range 0.20-0.60 by adding an acid or base, and aging the mixture for at least 30 minutes at a temperature in the range 25 to 100°C.

This process results in a nucleating gel which is very active in the synthesis of MFI zeolites.

EP 1 707 533 A1

**Description**

The present invention relates to a process for the preparation of a nucleating gel, the resulting nucleating gel, and its use in the synthesis of a crystalline aluminosilicate zeolite having an MFI structure.

Aluminosilicates known as zeolites are highly complex chemical structures that present different crystalline structures as a function of their composition and method of preparation. Although they occur naturally, zeolites nowadays are mostly produced by industry aiming at various uses, among the more important of which are applications as adsorbents and as catalysts in the oil industry.

MFI-type zeolites, e.g. ZSM-5, are aluminosilicates with a crystalline structural framework. ZSM-5 compositions, in a preferred synthesized form, have the formula:

$$0.9 \pm 0.2 \ M_{2/n}O \cdot Al_2O_3 \cdot 5\text{-}100 \ SiO_2 \cdot zH_2O$$

wherein M is selected from the group consisting of a mixture of alkali metal cations, especially sodium, and tetraalkylammonium cations, the alkyl groups of which preferably contain 2-5 carbon atoms.

The preparation of ZSM-5 generally requires extended periods of crystallization, using large crystallization vessels and a precise control of the overall production process to avoid impurities (i.e. different crystalline phases) which harm the end product.

Often, a quaternary ammonium salt - in particular a tetrapropyl ammonium (TPA) salt - is used in ZSM-5 synthesis as a template. The disadvantage of using such templates is that they are expensive and that, as a result of decomposition of the organic template, environmentally harmful compounds are released upon heating of the so-prepared zeolites.

Hence, efficient preparation of ZSM-5, using a minimum amount of organic template, is desired.

In the prior art, there are numerous examples of the quaternary ammonium salt being replaced with other templates such as amines and alcohols. For example, Peter A. Jacobs and Johan A. Martens, in Studies in Surface Science and Catalysis Vol. 33, 1987, Chapter II, p. 113, reviewed the synthesis of ZSM-5 in the absence of tertrapropyl ammonium ions. They observed, however, that the tetrapropyl ammonium ion was still the most efficient template.

It is generally known that the use of seeding material accelerates the crystallization process.

The use of seeding materials that contain MFI-type zeolites was disclosed in US 4,175,114, US 4,199,556, and US 4,257,855. These patents describe the use of about 5 wt% of seeds in terms of silica employed, which represents a significant cost factor. Attempts to use only small amounts of solid seeds, from 0.1 to 2% (see US 4,275,047), gave products with a low yield in the ZSM-5 phase after a long synthesis time.

Though not very efficient as such, solid seeds can be used together with other templates or organics in general. In this case, the presence of solid seeds often accelerates the overall process or inhibits the formation of impurities. Examples of using both seeds and templates can be found in US 4,175,114, US 4,199,556, US 5,160,500, US 5,209,918. Again, about 1-6 wt% of seeds in terms of total silica was employed.

Narita et al. (Ind. Chem. Prod. Res. Dev. Eng., 23 (1985) 507-512) employed a seed amount of 0.36% in the presence of acetone and obtained ZSM-5 of high purity.

However, the use of MFI-type seeds makes the zeolite synthesis process rather expensive. An attractive and less expensive seeding method was found in the use of amorphous seeding gels.

US 4,606,900 (Kacirek et al.) discloses a method of preparing crystalline ZSM-5 zeolite using an X-ray amorphous aluminosilicate nucleating gel in the silica-alumina reaction batch. The nucleating gel is added to the zeolite synthesis mixture in an amount of 4-40 wt% in terms of the $SiO_2$ content of the resulting zeolite synthesis mixture. The nucleating gel was prepared by mixing 6.9 g of amorphous silicic acid with the composition 1 $SiO_2$ : 0.5 $H_2O$ with 1.6 g NaOH, 1.3 g tetrapropyl ammonium bromide (TPA-Br), and 18 g water while stirring at room temperature, followed by aging for 46 hours. The correct formula of the resulting nucleating gel is

$$1 \ SiO_2 \cdot 0.39 \ NaOH \cdot 0.05 \ TPA\text{-}Br \cdot 10 \ H_2O$$

WO 03/074423 discloses an amorphous nucleating gel which contained no organic template. It was demonstrated that the silica to alumina ratio of this gel must be in the range 10-20 in order to be effective.

The objective of the present invention is to provide a nucleating gel that is more active than these prior art nucleating gels.

Surprisingly, it has now been found that such a nucleating gel can be prepared by the process of the present invention, which comprises the following steps:

(a) mixing sodium silicate, water, and a quaternary ammonium salt,
(b) adjusting the molar ratio $OH^-/SiO_2$ in the mixture of step (a) to a value in the range 0.20-0.60 by adding an acid or base, and

(c) aging the mixture of step (b) for at least 30 minutes at a temperature in the range 25 to 100°C.

In contrast to the nucleating gel of WO 03/074423, the nucleating gel resulting from the process of the present invention contains a quaternary ammonium salt. As illustrated in the Examples below, this results in a more active nucleating gel.

Compared to the process of US 4,606,900, the process according to the invention uses sodium silicate as the silica source. It was found that the use of sodium silicate results in more active nucleating gels than the use of amorphous silicic acid. Additionally, sodium silica is an inexpensive material.

Because of the higher activity of the nucleating gel according to the present invention compared to prior art nucleating gels, zeolite synthesis using this nucleating gel requires shorter crystallization times. Furthermore, smaller amounts of nucleating gel and, hence, of the expensive quaternary ammonium compound, can be used for zeolite synthesis.

Perhaps even more importantly, the high activity of the nucleating gel of the present invention guarantees a reproducible production of high yields of pure ZSM-5 crystals.

Step a) in the process of the present invention involves mixing sodium silicate, water, and a quaternary ammonium salt. These compounds can be added in any order of addition. Preferably, the mixture does not contain an alumina source, because the presence of alumina in the nucleating gel will decrease its activity.

Any type of sodium silicate can be used. Preferred types of sodium silicate have a sodium content (as $Na_2O$) of 5-20 wt%, more preferably 7-13 wt%, and a silicon content (as $SiO_2$) of 10-40 wt%, more preferably 20 to 35 wt%. The $Na_2O/SiO_2$ mole ratio in the sodium silicate preferably is higher than 0.1 in order to ensure that the silicate remains in solution and no silica precipitation occurs.

Sodium silicates suitable for use in the process of the invention include (i) water glass and (ii) silica sols with a very small particle size and a high NaOH content.

Suitable quaternary ammonium salts include tetrapropyl ammonium hydroxide (TPAOH), tetrapropyl ammonium bromide (TPA-Br) and chloride (TPA-Cl), with TPAOH being preferred.

The molar ratio $H_2O/SiO_2$ in the nucleating gel preferably is higher than 10, more preferably 12-45, and most preferably 15-30. The molar ratio quaternary ammonium salt/$SiO_2$ in the nucleating gel preferably is 0.05-0.50, more preferably 0.1-0.2.

In step b), the molar ratio OH-/$SiO_2$ in the mixture of step (a) is adjusted to a value in the range 0.20-0.60 by adding an acid or a base, preferably under vigorous stirring. In the case of an acid, an inorganic acid such as sulfuric acid, hydrochloric acid, or phosphoric acid is preferred, the most preferred acid being sulfuric acid. In the case of a base, NaOH is preferred.

In the next step, the mixture is aged for at least 30 minutes. Aging is preferably conducted for 30 minutes to 150 days, more preferably 6 hours to 90 days, most preferably 24 hours to 40 days, depending on the temperature applied. The temperature of the mixture during aging is 20-100°C, preferably 50 to 90°C, and most preferably 60 to 80°C. The mixture may be stirred during aging, but this is not necessary.

The resulting nucleating gel is X-ray amorphous.

The nucleating gel according to the present invention can be used for the synthesis of various types of molecular sieves, such as ZSM-5, silicalite, titanium silicate, chromosilicates, and other materials with the MFI crystal structure.

The preparation of these zeolites involves aging a zeolite synthesis mixture which generally is an alkaline aqueous mixture comprising a silica source, the nucleating gel, and optionally an alumina source.

The zeolite synthesis mixture is prepared by mixing a silica source and optionally an aluminia source with the nucleating gel at ambient temperature.

Suitable silica sources include sodium silicate, amorphous silicic acid, and silica sol, for instance ammonium stabilized silica sol.

Suitable alumina sources include aluminium salts such as aluminium sulfate, sodium aluminate, aluminium nitrate, aluminium chlorohydrate, aluminium trihydrate such as gibbsite, BOC, and bayerite, calcined forms of aluminium trihydrate including flash-calcined gibbsite. Also mixtures of the above-mentioned alumina sources may be used.

Instead of using separate silica and aluminia sources, a silica-alumina source can be used. Such a silica-alumina source can be obtained in several ways and in widely varying silica-alumina ratios. For example, a silica-alumina source can be obtained from the co-precipitation of a source of silica (such as sodium silicate) with a source of alumina (such as aluminium sulfate or sodium aluminate) - as taught in GB 2166971 and EP 0129766.

In order to prepare the zeolite synthesis mixture, it is preferred to combine an acidic, preferably aluminium-containing solution or suspension with a basic solution or suspension containing the silica source and the nucleating gel, under vigorous or gentle stirring.

Any inorganic acid can be used to prepare the acidic solution or suspension, with sulfuric acid being preferred. The acidic solution or suspension may be added to the basic solution or suspension, the basic solution or suspension may be added to the acidic solution or suspension, or both solutions or suspensions may be dosed to the reactor at the same time.

The amount of amorphous nucleating gel, based on the amount of $SiO_2$, preferably is below 4 wt%, more preferably below 2 wt%, and most preferably below 1 wt%.

The zeolite synthesis mixture preferably has the following composition:

$$1\ SiO_2 \cdot 0.0025\text{ -}0.05\ Al_2O_3 \cdot 0.05\text{ -}0.50\ NaOH \cdot 0.0005\text{-}0.04\ TPAOH \cdot 10\text{-}60H_2O$$

more preferably

$$1\ SiO_2 \cdot 0.005\text{ -}0.033\ Al_2O_3 \cdot 0.10\text{ -}0.40\ NaOH \cdot 0.001\text{ - }0.02\ TPAOH \cdot 12\text{-}50H_2O$$

most preferably

$$1\ SiO_2 \cdot 0.01\text{-}0.025\ Al_2O_3 \cdot 0.15\text{ -}0.30\ NaOH \cdot 0.002\text{-}0.01\ TPAOH \cdot 12\text{-}40H_2O$$

The amount of NaOH refers to the amount of NaOH not neutralized by inorganic acid. Hence, the synthesis mixture may further contain neutralized sodium salts. An example of such a salt is sodium sulfate, wherein the sulfate results from sulfuric acid.

Additionally, the synthesis mixture may contain a low-molecular weight alcohol. The presence of alcohols in this mixture provides a good medium where small amounts of seed can be effective and where impurity phases will not develop readily. A preferred alcohol is ethanol, but also other alcohols may be used, such as methanol, propanoi, and buianoi.

The resulting zeolite synthesis mixture may be hydrothermally treated for 1 hour to 7 days, preferably 1-72 hours, even more preferably 1-48 hours, most preferably 1-24 hours. The treatment temperature preferably is 100-220°C, more preferably 120-200°C, and most preferably 140-180°C. Preferably, autogeneous pressures are used.

The desired temperature and time for this hydrothermal treatment depends on the composition of the mixture (e.g. the SAR) and whether or not the mixture is being stirred. The higher the SAR of the mixture, the faster the zeolite synthesis and the shorter the required hydrothermal treatment time.

This hydrothermal treatment can be conducted directly after preparation of the zeolite synthesis mixture. Alternatively, the zeolite synthesis mixture is kept at ambient temperature for days to months before being hydrothermally treated.

The resulting zeolites are typically obtained in the alkali form. They can be converted to the hydrogen form by ion exchange with ammonium salts. Subsequent calcination converts the zeolite from the ammonium form into the hydrogen.

Other metals can also be substituted for the ammonium, such as rare earths, transition metals, zinc, calcium, and iron. In conventional procedures, the organic template is removed from the zeolite by calcination prior to any ion exchange treatment. Because the process of the present invention allows the use of only minor amounts of quaternary ammonium ions, a calcination treatment prior to ion exchange is not required.

After the zeolite's preparation, it can be useful to incorporate it into a matrix material. The matrix material can act as a binder and give strength to the particle to withstand severe temperatures, pressures, and any fluidization conditions normally encountered in many cracking processes. Useful matrix components include synthetic and naturally occurring materials, such as clay, alumina, silica and/or other metal oxides.

The zeolites, optionally after incorporation into a matrix material, can be shaped to form shaped bodies. Suitable shaping steps include spray-drying, pelletizing, extrusion (optionally combined with kneading), beading, or any other conventional shaping method used in the chemical or petroleum industry.

EXAMPLES

Example 1

Nucleating gels with the following composition were prepared:

$$1\ SiO_2 \cdot x\ OH \cdot 0.1\ TPAOH \cdot 24\ H_2O$$

with x varying between 0.25 and 0.45.

These gels were prepared by mixing 217 g of water glass (8.59 wt% $Na_2O$; 27.7 wt% $SiO_2$) with 50.8 g of an aqueous 40% TPAOH solution and 263 g of de-ionized water. Different amounts of concentrated (98%) sulfuric acid were added under vigorous stirring at room temperature. The latter amounts varied between 7.66 and 17.9 g, depending on the final OH- concentration desired in the nucleating gel.
Different portions of the resulting mixture were aged statically at different temperatures for different time periods (see Table 1) to produce nucleating gels according to the present invention.

Example 2

This Example illustrates the use of the nucleating gels according to Example 1 in the synthesis of ZSM-5.
Zeolite synthesis mixtures were prepared by mixing 5.0 g of the nucleating gel of Example 1 with 197 g of water glass (8.59 wt% $Na_2O$; 27.7 wt% $SiO_2$) and 135 g of water under gentle stirring for 15 minutes. Then, a mixture containing 19.3 g aluminium sulfate solution (containing 8.11 % of $Al_2O_3$) and 14 g of concentrated sulfuric acid, diluted with 135 g of de-ionized water, was added under stirring. Small adjustments were made in the sulfuric acid concentration (in the order of 0.1 g) in order to compensate for the difference in active OH- ions provided by the different nucleating gels.
This resulted in zeolite synthesis gels with the following composition:

$$1\ SiO_2 \cdot 1/60\ Al_2O_3 \cdot 0.20\ OH \cdot 0.001\ TPAOH \cdot 25\ H_2O$$

The synthesis gels were then placed in Teflon® cups, fitted in stainless steel autoclaves, and submitted to hydrothermal treatment at 170°C and autogeneous pressure, without stirring.
The crystallinity of the resulting ZSM-5 zeolites was determined with X-ray diffraction (XRD). The instrument used was a Siemens D-5000TT, with CuK$\alpha$ radiation and a solid-state detector. All the 2θ peaks between 20-25° 2θ were considered and integrated for calculating the crystalline percentage of the zeolite. ZSM-5 prepared according to the technique taught by the original ZSM-5 patent from Argauer and Landolt (U.S. Pat 3,702,886) was taken as 100% crystallinity standard.
The crystallinity of the resulting product after 12 and 24 hours of hydrothermal treatment using the different nucleating gels is presented in Table 1. It shows that the nucleating gels according to the invention can be applied successfully in ZSM-5 synthesis. It further shows that an increased aging time and temperature of the nucleating gel leads to more active nucleating gels. Finally, it can be observed that nucleating gels with an OH-/$SiO_2$ molar ratio of 0.30-0.40 are the most active.

Table 1 - Percentage of ZSM-5 formed after autoclaving at 170°C, under static conditions, using different nucleating gels according to the invention

| Exp. | nucleating gel | | | % ZSM-5 | |
|---|---|---|---|---|---|
| | OH-/SiO2 | aging temp. (°C) | aging time (days) | % after 12 h | % after 24 h |
| 1 | 0.25 | 100 | 7 | 64 | 84 |
| 2 | 0.30 | 60 | 7 | 86 | 82 |
| 3 | 0.35 | 60 | 7 | 83 | 87 |
| 4 | 0.45 | 60 | 7 | 84 | 86 |
| 5 | 0.35 | 60 | 7 | amorphous | 25 |
| 6 | | 25 | 7 | 28 | 90 |
| 7 | 0.35 | 25 | 15 | 33 | 80 |
| 8 | 0.35 | 25 | 30 | 92 | 86 |

All the above experiments with nucleating gels according to the present invention result in higher ZSM-5 yields than a comparable experiment in US 4,606,900 (Example 7 of US 4,606,900) using a nucleating gel prepared from amorphous silicic acid. Although this prior art experiment even used a more active zeolite synthesis mixture (because it contained less aluminium) and aged it at a higher temperature (200°C) for a longer time period (72 hrs), only 15-20% ZSM-5 was obtained.

Comparative Example A

In this Comparative Example, a nucleating gel according to WO 03/074423 was prepared, having the composition:

$$16\ SiO_2 \cdot 1\ Al_2O_3 \cdot 15\ Na_2O \cdot 210\ H_2O$$

This gel was prepared according to the procedure of Example 1, except that the ingredients were adapted to the above formula and the mixture was aged at room temperature for 14 days.

This nucleating gel was then used to prepare a zeolite synthesis mixture following the procedure of Example 2. The amount of nucleating gel used was 3 wt% in terms of $SiO_2$. The resulting zeolite synthesis mixture had an overall composition:

$$1\ SiO_2 \cdot 1/60\ Al_2O_3 \cdot 0.20\ OH \cdot 25\ H_2O$$

This zeolite synthesis gel was hydrothermally treated using the procedure of Example 2. Even after 24 hours of aging, the synthesis gel did not yield any detectable amounts of ZSM-5.

Example 3

This example shows the effect of the type of organic template.
TPAOH-containing nucleating gels with the following composition were prepared:

$$1\ SiO_2 \cdot x\ OH \cdot 0.1\ TPAOH \cdot 24\ H_2O$$

with x varying between 0.25 and 0.45.

These gels were prepared by mixing 217 g of water glass (8.59 wt% $Na_2O$; 27.7 wt% $SiO_2$) with 50.8 g of an aqueous 40% TPAOH solution and 263 g of de-ionized water. Different amounts of concentrated (98%) sulfuric acid were added under vigorous stirring at room temperature. This amount varied between 7.66 to 17.9 g, depending on the final OH- concentration desired in the nucleating gel.

TPA-Br-containing nucleating gels were prepared according to the same procedure, except that 50.8 g of TPAOH were replaced with 26.6 g of TPA-Br (which contained the same amount of TPA ions as 50.8 g of 40% TPAOH), giving a molar composition of the nucleating gel:

$$1\ SiO_2 \cdot y\ OH \cdot 0.1\ TPA\text{-}Br \cdot 24\ H_2O$$

Both gels were aged under typical conditions of Table 2.
Zeolite synthesis mixtures were prepared by mixing the nucleating gel with 205 g of water glass (8.59 wt% $Na_2O$; 27.7 wt% $SiO_2$) and 133 g of water under gentle stirring for 15 minutes. The amount of nucleating gel in the zeolite synthesis mixture was such that the nucleating gel contributed by 1% to the silica content of the zeolite synthesis mixture. This corresponded to the use of 5.07 g of TPA-Br-containing nucleating gel and 5.0 g of TPAOH-containing nucleating gel.

Then, a mixture containing 19.3 g aluminium sulfate solution (containing 8.11% of $Al_2O_3$) and 14 g of concentrated sulfuric acid, diluted with 130 g of de-ionized water, was added under stirring. Small adjustments were made in the sulfuric acid concentration (in the order of 0.1 g) in order to compensate for the difference in active OH- ions provided by the different nucleating gels.

To these reaction mixtures, 42 g of ethanol were added. The final composition of the zeolite synthesis mixtures was:

$$1\ SiO_2 \cdot 1/60\ Al_2O_3 \cdot 0.20\ OH \cdot 0.001\ TPA\text{-}X \cdot 24\ H_2O \cdot 1\ EtOH$$

wherein X is either Br or OH.

These zeolite synthesis mixtures were hydrothermally treated at 150°C at autogeneous pressure. The results are shown in Table 2. It is clear from this Table that TPAOH results in a more active nucleating gel than TPA-Br. Further, comparing the results for experiments 1 a and 11b and 13a and 13b, it is clear that the nucleating gel and ZSM-5 preparation procedures are fairly reproducible, especially the procedure with the TPAOH-containing nucleating gel.

Table 2 - Percentage of ZSM-5 formed after autoclaving at 150°C using different nucleating seeds

| Expt | nucleating gel | | | | % ZSM-5 after different crystallization times | | | |
|------|----------|-----------|-------|----------|------|------|------|------|
| | template | $OH/SiO_2$ | T (°C) | t (days) | 16 h | 24 h | 48 h | 72 h |
| 10 | TPA-Br | 0.25 | 100 | 15 | 62 | 77 | 91 | 92 |
| 11a | TPA-Br | 0.35 | 60 | 8 | Am [*] | 28 | 55 | 83 |
| 11b | TPA-Br | 0.35 | 60 | 8 | Am[*] | 19 | 35 | 78 |
| 12 | TPAOH | 0.25 | 100 | 15 | 86 | 97 | 95 | 97 |
| 13a | TPAOH | 0.35 | 60 | 8 | 82 | 93 | 95 | 96 |
| 13b | TPAOH | 0.35 | 60 | 8 | 80 | 90 | 93 | 94 |

[*] Am = amorphous

Example 4

A nucleating gel A was prepared according to Example 1. This nucleating gel had the following composition:

$$1 \text{ SiO}_2 \cdot 0.25 \text{ OH} \cdot 0.1 \text{ TPAOH} \cdot 24 \text{ H}_2\text{O}$$

Nucleating gel B was prepared according to the same procedure, except that only 10% of the amount of TPAOH was used. It had the following composition:

$$1 \text{ SiO}_2 \cdot 0.25 \text{ OH} \cdot 0.01 \text{ TPAOH} \cdot 24 \text{ H}_2\text{O}$$

Both gels were prepared by aging at room temperature for 15 days.
These nucleating gels were used to prepare synthesis mixtures - according to the procedure of Example 3 - with the final composition

$$1 \text{ SiO}_2 \cdot 1/60 \text{ Al}_2\text{O}_3 \cdot 0.20 \text{ OH} \cdot 0.001 \text{ TPAOH} \cdot 24 \text{ H}_2\text{O} \cdot 1 \text{ EtOH}$$

To obtain zeolite synthesis mixtures with the same composition, 1 wt% (in terms of $SiO_2$) of nucleating gel A and 10 wt% (in terms of $SiO_2$) of nucleating gel B were used.
The zeolite synthesis mixtures were subjected to hydrothermal treatment at 150°C. The results are shown in Table 3. This Table clearly indicates that a higher concentration of TPAOH *in the nucleating gel* increases the reaction rate, even if the *zeolite synthesis mixtures* where of equal TPAOH-content.

Table 3 - Synthesis results using TPAOH as template at 150°C, 1% gel seed.

| gel | $TPAOH/SiO_2$ of nucleating gel | % ZSM-5 after different time | | |
|-----|------------------------------|------|------|------|
| | | 24 h | 48h | 72h |
| A | 0.1 | 90 | 97 | 97 |
| B | 0.01 | Am | Am | 9 |

Example 5

The performance of a nucleating gel according to the present invention in seeding a ZSM-5 synthesis mixture was compared with the performance of ZSM-5 solid seeds.

To this end, ZSM-5 crystals - with 100 % crystallinity compared with standard samples prepared according to US 3,702,886 - were used as solid seeds. As observed by electron microscopy, these ZSM-5 crystals were - on average - 3 $\mu$m aggregates of crystallites with linear dimensions (length, width or height) of about 0.4 $\mu$m.

The nucleating gel according to the invention used in this experiment was prepared by the same procedure as in Example 1, using an aging temperature of 60°C and an aging time of 7 days. The nucleating gel had the following composition:

$$1 \; SiO_2 \cdot 0.35 \; OH \cdot 0.1 \; TPAOH \cdot 24 \; H_2O$$

Zeolite synthesis mixtures were prepared by a similar procedure to that in Example 2.
The zeolite synthesis mixtures containing the solid seeds had the following composition:

$$1 \; SiO_2 \cdot 1/60 \; Al_2O_3 \cdot 0.2 \; OH \cdot 24 \; H_2O$$

As the amount of seeds varied (see Table 4), the amounts of water glass, water, and acid were slightly adjusted in order to reach the above composition.

The zeolite synthesis mixtures containing the nucleating gel had the following composition:

$$1 \; SiO_2 \cdot 1/60 \; Al_2O_3 \cdot 0.20 \; OH \cdot 0.001 \; TPAOH \cdot 24 \; H_2O$$

The synthesis mixtures were subjected to an autoclave treatment at 170°C under stirring. The results are shown in Table 4. This table clearly shows that a nucleating gel according to the present invention results in a higher ZSM-5 yield in a shorter time period than solid ZSM-5 crystallite seeds.

Table 4 - percentage ZSM-5 formed using different seeding methods

| Exp. | Seed type | wt % seed, based on SiO2 | % ZSM-5 after different synthesis time | | | |
|------|-----------|--------------------------|------|------|------|------|
| | | | 2 hr | 4 hr | 6 hr | 8 hr |
| 1 | Nucleating gel | 0.5 | n.a | 90 | n.a. | n.a. |
| 2 | Nucleating gel | 1 | 95 | 95 | n.a | n.a. |
| 3 | Solid | 1 | 10 | 11 | 16 | 25 |
| 4 | Solid | 4 | 17 | 31 | 26 | 70 |
| 5 | Solid | 4 | 14 | 26 | 36 | 54 |
| 6 | Solid | 8 | 28 | 41 | 56 | 78 |

**Claims**

1. Process for the preparation of a nucleating gel, which process comprises the steps of:

    (a) mixing sodium silicate, water, and a quaternary ammonium salt,
    (b) adjusting the molar ratio $OH^-/SiO_2$ in the mixture of step (a) to a value in the range 0.20-0.60 by adding an acid or base, and
    (c) aging the mixture of step (b) for at least 30 minutes at a temperature in the range 25 to 100°C.

2. A process according to claim 1 wherein the quaternary ammonium salt is tetrapropyl ammonium hydroxide (TPAOH).

3. A process according to claim 1 or 2 wherein the acid added in step (b) is sulfuric acid.

4. A process according to any one of the preceding claims wherein the molar ratio $OH^-/SiO_2$ in step b) is in the range 0.25-0.45, more preferably 0.3-0.4.

5. A process according to claim 4 wherein the molar ratio $OH^-/SiO_2$ is 0.3-0.4.

6. A process according to any one of the preceding claims wherein the molar ratio $H_2O/SiO_2$ in the nucleating gel is higher than 10, preferably 12-45, more preferably 15-30.

7. A process according to any one of the preceding claims wherein the molar ratio quaternary ammonium salt/$SiO_2$ in the nucleating gel is 0.05-0.50, more preferably 0.1-0.2.

8. Nucleating gel obtainable by the process according to any one of the preceding claims.

9. A process for synthesizing a zeolite having an MFI structure comprising crystallizing said zeolite from a zeolite synthesis mixture comprising a silica source, optionally an alumina source, and the nucleating gel of claim 8.

10. A process according to claim 9 wherein the nucleating gel is present in the alkaline aqueous reaction mixture in an amount of 0.05 to 1 wt% in terms of $SiO_2$ content of the zeolite synthesis mixture.

**European Patent Office**

# EUROPEAN SEARCH REPORT

Application Number

EP 05 07 5770

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 4 606 900 A (KACIREK ET AL) 19 August 1986 (1986-08-19) * column 1, line 5 - line 12 * * column 1, line 34 - line 44 * * column 2, line 68 - column 3, line 6 * * column 3, line 35 - line 41 * | 1-10 | C01B39/04 C01B39/40 |
| D,A | WO 03/074423 A (AKZO NOBEL N.V) 12 September 2003 (2003-09-12) * page 4, line 24 - page 5, line 3 * | 1,9 | |
| A | WO 03/080510 A (COUNCIL OF SCIENTIFIC AND INDUSTRIAL RESEARCH) 2 October 2003 (2003-10-02) * claim 1 * * abstract * * page 2, line 26 - page 3, line 4 * | 1,9 | |
| A | DATABASE COMPENDEX [Online] ENGINEERING INFORMATION, INC., NEW YORK, NY, US; MEGED' N F ET AL: "Synthesis of pentasil type zeolite with injection of amorphous seeds" XP002348973 Database accession no. EIX92111370548 * abstract * & KHIM TEKHNOL TOPL MASEL; KHIMIYA I TEKHNOLOGIYA TOPLIV I MASEL FEB 1992, no. 2, February 1992 (1992-02), pages 13-14, | 1,9 | TECHNICAL FIELDS SEARCHED (Int.Cl.7) C01B |

-/--

The present search report has been drawn up for all claims

| Place of search | Date of completion of the search | Examiner |
|---|---|---|
| The Hague | 14 October 2005 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 07 5770

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE INSPEC [Online] THE INSTITUTION OF ELECTRICAL ENGINEERS, STEVENAGE, GB; March 2004 (2004-03), HE CHI-JIAN ET AL: "Studies on the synthesis of Fe-[beta] zeolite by using nucleation gel" XP002348974 Database accession no. 8267743 * abstract * & Journal of Natural Science of Hunan Normal University Hunan Normal Univ China, vol. 27, no. 1, March 2004 (2004-03), pages 51-54, ISSN: 1000-2537 ----- | 1 | |
| A | US 5 330 736 A (WU ET AL) 19 July 1994 (1994-07-19) * column 5, line 42 - line 53 * * example 1 * ----- | 1 | |
| A | KASSAHARA S ET AL: "CLEAR AQUEOUS NUCLEI SOLUTION FOR FAUJASITE SYNTHESIS" PROCEEDINGS OF THE INTERNATIONAL CONFERENCE ON ZEOLITES, 1986, pages 185-192, XP008053973 * the whole document * ----- | 1 | TECHNICAL FIELDS SEARCHED (Int.Cl.7) |

The present search report has been drawn up for all claims

| Place of search | Date of completion of the search | Examiner |
|---|---|---|
| The Hague | 14 October 2005 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 07 5770

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2005

| Patent document cited in search report | | Publication date | Patent family member(s) | | Publication date |
|---|---|---|---|---|---|
| US 4606900 | A | 19-08-1986 | DE | 3402842 A1 | 08-08-1985 |
| | | | DK | 34285 A | 28-07-1985 |
| | | | EP | 0150256 A2 | 07-08-1985 |
| | | | JP | 1871372 C | 06-09-1994 |
| | | | JP | 5083483 B | 26-11-1993 |
| | | | JP | 60176917 A | 11-09-1985 |
| | | | ZA | 8500618 A | 28-08-1985 |
| WO 03074423 | A | 12-09-2003 | BR | 0308110 A | 04-01-2005 |
| | | | CA | 2477713 A1 | 12-09-2003 |
| | | | CN | 1656018 A | 17-08-2005 |
| | | | EP | 1478596 A1 | 24-11-2004 |
| | | | JP | 2005519014 T | 30-06-2005 |
| WO 03080510 | A | 02-10-2003 | NONE | | |
| US 5330736 | A | 19-07-1994 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4175114 A
- US 4199556 A
- US 4257855 A
- US 4275047 A
- US 5160500 A
- US 5209918 A

- US 4606900 A, Kacirek
- WO 03074423 A
- GB 2166971 A
- EP 0129766 A
- US 3702886 A

**Non-patent literature cited in the description**

- **PETER A. JACOBS ; JOHAN A. MARTENS.** *Studies in Surface Science and Catalysis,* 1987, vol. 33, 113

- **NARITA et al.** *Ind. Chem. Prod. Res. Dev. Eng.,* 1985, vol. 23, 507-512